Europäisches Patentamt

(19) European Patent Office    (11) Numéro de publication: **0 192 005**

Office européen des brevets    **B1**

## (12) FASCICULE DE BREVET EUROPÉEN

(45) Date de publication du fascicule du brevet:    (51) Int. Cl.⁴: **H 01 B 3/24,** C 08 L 23/10,
06.12.89    C 08 K 3/04

(21) Numéro de dépôt: 85402503.8

(22) Date de dépôt: 16.12.85

(54) **Matériau thermoplastique conducteur de l'électricité.**

(30) Priorité: 18.12.84 FR 8419359

(43) Date de publication de la demande:
27.08.86 Bulletin 86/35

(45) Mention de la délivrance du brevet:
06.12.89 Bulletin 89/49

(84) Etats contractants désignés:
DE FR GB

(56) Documents cité:
EP-A-0 123 540
DE-A-3 012 772
DE-A-3 135 430
FR-A-2 273 843

(73) Titulaire: **OCCIDENTAL CHEMICAL
CORPORATION, Riverpark 900 Connecticut
Avenue, Norwalk Connecticut 06850 (US)**

(72) Inventeur: **Delphin, René, 1 Allée des Glycines,
F-92260 Fontenay aux Roses (FR)**
Inventeur: **Regnaut, Bernard, 13 rue Julien Perrin
Escalier A4, F-92160 Antony (FR)**

(74) Mandataire: **Weinmiller, Jürgen, Lennéstrasse 9
Postfach 24, D-8133 Feldafing (DE)**

EP 0 192 005 B1

## Description

La présente invention concerne un matériau thermoplastique très conducteur de l'électricité, utilisable, par exemple, dans les joints conducteurs, dans les éléments bipolaires de piles a combustible et dans d'autres dispositifs électrochimiques.

Un tel matériau doit présenter simultanément plusieurs caractéristiques:

- une résistivité électrique aussi faible que possible comprise, par exemple, entre quelques ohms. centimètre et quelques dixièmes d'ohms. centimètre;
- une bonne homogénéité de composition et de caractéristiques, notamment électriques et mécaniques;
- une absence d'additifs nuisibles aux catalyseurs éventuellement employés dans les dispositifs électrochimiques concernés;
- une inertie chimique suffisante vis-à-vis des fluides pouvant circuler dans ces dispositifs électrochimiques, aux températures de travail utilisées ;
- un prix de revient très bas;
- une aptitude à la mise en oeuvre industrielle économique par des opérations d'extrusion, calandrage, thermocompression, injection, en vue d'obtenir en grandes séries des pièces ayant la forme générale de plaques minces de grande surface: épaisseurs voisines du millimètre; surface de plusieurs décimètres carrés pouvant atteindre le mètre carré;
- des caractéristiques mécaniques telles que les plaques ainsi réalisées avec ce matériau ne soient pas fragiles mais possèdent une résistance à la flexion, à froid et à chaud, compatible avec les méthodes d'assemblage des dispositifs électrochimiques ou autres dont elles peuvent constituer des éléments;
- une étanchéité suffisante aux gaz et aux liquides pour les épaisseurs de pièces indiquées ci-dessus;
- une stabilité des caractéristiques dans le temps compatible avec les utilisations envisagées.

En ce qui concerne la résistivité, il est possible d'obtenir un matériau satisfaisant en incorporant au matériau thermoplastique des charges métalliques; mais le coût d'un tel matériau est très élevé et en outre les charges métalliques peuvent ne pas être chimiquement inertes vis-à-vis du milieu environnant. Il est donc plus avantageux pour ces raisons de mettre en oeuvre des charges carbonées, beaucoup moins coûteuses, et dont la réactivité est généralement beaucoup plus faible.

De nombreux matériaux thermoplastiques conducteurs de l'électricité contenant des charges carbonées ont déjà été réalisés et, parfois, commercialisés comme en témoignent les articles suivants:

- Electrical Conduction Mechanism in carbon filled polymers (IEEE Transactions May/June 1971; pages 913 à 916);
- Modern Plastics International: March 1976; pages 45 à 47;
- JEE; Novembre 1978 pages 42 à 45;
- Modern Plastics International: August 1983; pages 38 à 40;
- Research and Development: May 1984; pages 118 à 123;
- Adhesives Age: June 1984; pages 17 à 20.

Aucun des produits décrits dans ces articles ne présente l'ensemble des caractéristiques précitées.

Le tableau I ci-après résume les résistivités électriques des produits commerciaux actuellement connus ainsi que quelques renseignements concernant leur fabrication, le taux de charge carbonée, et l'indice de viscosité à chaud (Melt Flow Index) qui conditionne leur mise en oeuvre économique pour réaliser des pièces minces de grande surface.

**Tableau I**

| Référence | Procédé type de machine | Résistivité ($\Omega$ cm) | Concentration (%) | | Melt Index (g/10 min) |
|---|---|---|---|---|---|
| Darling Co | mélangeur ouvert | 25,4 | 64 | | |
| Darling Co | mélangeur ouvert | 7,6 | 70 | | |
| Darling Co | mélangeur ouvert | 5,1 | 76 | | |
| Esso Research | | 57 | 39 | (1) | |
| Esso Research | | 17 | 32 | (1) | |
| L N P | | 5 à 20 | 40 | (2) | |
| Uniroyal (TPR) | | 150 | | | |
| Caprez | | 9,3 | 30 | | 14,4 à 230É sous 21,6 Kg |
| Caprez CP | | 6 | | | 4,5 à 230É sous 21,6 Kg |
| Abbey 100 | | 8 | 45 | | |
| Dupont de Nemours (NDX4769) | | 30 | | | |
| Tecknit 860 | | 10 | | | |
| Tecknit 861 | | 5 | | | |
| Cabelec® | | 0,7 | 50 | | |
| Cabelec® | | 0,9 | 47 | | |

(1) : Noir de carbone Vulcan XC72
(2) : Fibres de carbone

On constate que les faibles résistivités électriques obtenues par les méthodes classiques (mélangeur ouvert ou mélangeur interne de type Banbury) le sont au prix d'un taux de charge carbonée très élevé.

Les produits ainsi obtenus ne sont pas utilisables pour l'injection économique de pièces minces de grande surface du fait de leur fluidité à chaud insuffisante ou de la fragilité des objets obtenus.

Le brevet américain n° 4 124 747 décrit par ailleurs un procédé discontinu consistant à mélanger dans un malaxeur préchauffé de type Banbury un mélange d'un copolymère thermoplastique de propylène-éthylène et de carbone finement divisé, la proportion de carbone étant de l'ordre de 30 % en poids. Le préchauffage est de l'ordre de 100°; le malaxage est effectué pendant une durée de l'ordre de 3 à 5 minutes. Le matériau thermoplastique ainsi obtenu peut être extrudé sous forme de feuilles dont l'épaisseur est comprise entre 150 µm et 500 µm et dont la résistivité est de l'ordre de quelques ohms-centimètre. Mais sa mise en oeuvre par injection en vue d'obtenir des pièces minces et de grande surface est pratiquement impossible pour les raisons déjà indiquées ci-dessus.

Par ailleurs, la Demanderesse a réalisé un certain nombre d'essais en vue de tenter d'améliorer cette situation, en utilisant des mélangeurs ouverts ou fermés (de type Banbury) ainsi que par mélange préalable des deux constituants à l'état de poudre dans un mélangeur ultra-rapide, suivi d'une plastification de ce mélange dans une boudineuse. Les principaux résultats de ces essais sont résumés cidessous dans le Tableau II.

**Tableau II**

| Référence | Procédé type de machine | Résistivité en Ω cm | Concentration en % | Melt Index en g/10 min |
|---|---|---|---|---|
| Essai n° 1 | Mélangeur ouvert | 0,85 | 47 | |
| Essai n° 2 | Mélangeur ouvert | 0,87 | 47 | |
| Essai n° 3 | Banbury | 0,43 | 47 | 0 à 230 sous 21 Kg |
| Essai n° 4 | Banbury | 0,80 | 47 | |
| Essai n° 5 | Banbury | 1 | 47 | 1 à 230 sous 21,6 Kg |

En conclusion, il semble que les différents procédés utilisés jusqu'ici ne permettent pas de réaliser un matériau suffisamment conducteur de l'électricité sans recourir à des concentrations de carbone qui entraînent un indice de fluidité à chaud beaucoup trop bas pour permettre l'injection de pièces minces de grande surface.

La présente invention a pour but de réaliser un matériau thermoplastique conducteur qui présente une résistivité encore inférieure à celle des matériaux précédents, c'est-à-dire de l'ordre de quelques dixièmes d'ohm-cm, et dont la fluidité à chaud soit suffisante pour que l'on puisse lui faire subir industriellement les opérations précitées, afin d'obtenir des feuilles conductrices très minces et peu fragiles.

Un objet de la présente invention est un matériau thermoplastique conducteur de l'électricité, caractérisé par le fait qu'il comprend un mélange de copolymère de propylène et d'éthylène, de noir de carbone dans une proportion de 30 % et 50 % en poids, et d'une charge carbonée fibreuse dans une proportion inférieure à 10 % en poids, de préférance de 3 % à 9 % en poids.

De manière tout-à-fait inattendue, on obtient un produit dont les caractéristiques électriques sont tout à fait remarquables, la conductivité électrique se trouve multipliée de plusieurs fois sa valeur.

Selon un perfectionnement, on fabrique le matériau selon l'invention de la manière suivante:

On met en oeuvre un malaxeur à double vis, la longueur de la vis étant supérieure à vingt fois son diamètre, on introduit en continu ledit copolymère dans une première zone de ledit double vis où il subit un compactage et un préchauffage, ledit copolymère passe ensuite dans une seconde zone de ladite double où il vis ie subit un malaxage et ledit noir carbone dans une proportion de 30 % à 50 %, en poids, au niveau d'une troisième zone de la double vis pour la dispersion de ladite charge, la vitesse de rotation de la double vis étant comprise entre 150 et 250 tours par minute, la température desdites zones étant située entre 165°C et 300°C, ledit mélange étant ensuite récupéré à la sortie d'une tête d'extrusion; on a introduit, soit en même temps que le noir de carbone, soit à un autre moment, de ladite charge carbonée fibreuse dans une proportion inférieure à 10 % en poids.

Avantageusement on met en oeuvre une double vis comportant une quatrième zone faisant suite à ladite troisième zone et destinée à réaliser un dégazage dudit mélange à une pression comprise entre la pression atmosphérique et quelques millibars.

De manière tout à fait inattendue, le mise en oeuvre du procédé précédent permet d'améliorer encore notablement le produit selon l'invention.

De préférence, on peut choisir la proportion en poids de noir entre 35 % et 45 %. Ce noir de carbone doit être très conducteur et d'un prix de revient aussi bas que possible tout en étant facile à incorporer dans le copolymère. Plus sa densité est faible, plus sa dispersion est bonne, mais plus l'incorporation se révèle délicate. Des compromis sont à choisir entre un taux de charge faible avec un noir très divisé et un taux de charge plus élevé avec un noir plus dense mais plus facile à incorporer.

Les résultats précités sont sont obtenus plus aisément si l'alimentation en continu en copolymère d'éthylène et propy-

3

lène, en noir de carbon et en charge fibreuse est effectuée par l'intermédiaire de doseurs gravimétriques garantissant une variation du dosage inférieure ou égale à ± 1 % de la valeur de consigne.

D'autres caractéristiques et avantages de la présente invention apparaîtront au cours de la description suivante de différents exemples de matériaux selon l'invention.

Dans le dessin annexé:

- la figure 1 est une vue tout à fait schématique d'un exemple de dispositif pour la fabrication du matériau selon l'invention;
- la figure 2 montre la variation de la résistivité ρ (Ω cm) en fonction de la concentration C (%) de charges carbonées fibreuses, d'un matériau selon l'invention (courbe F).

**Exemple I**

On réalise un matériau de l'art antérieur en incorporant dans un mélangeur interne de type Banbury (voir tableau II) un copolymère d'éthylène et de propylène du type vendu sous la dénomination PROPATHENE® GY 702 M, et du noir de carbone vendu sous la dénomination VULCAN XC 72. Le taux de noir est de 47 %. La température de préchauffage est de 100°C et la température de malaxage est de 150°C à 200°C; la durée de malaxage est de 5 à 10 minutes.

On obtient un matériau thermoplastique dont la résistivité est de 0,54 ohm-cm.

Selon l'invention, on opère dans les mêmes conditions que précédemment, en ajoutant au mélange des fibres de carbone vendues sous la dénomination MORGANITE type II-S.

Si l'on ajoute ces fibres dans une proportion de 3 % en poids de mélange, on obtient une résistivité qui passe de 0,54 ohm-cm à 0,2 ohm-cm. Si l'on ajoute ces fibres dans une proportion de 6 % en poids de mélange, on obtient également une résistivité qui passe de 0,54 ohm-cm à 0,2 ohm-cm. L'addition de fibres apporte donc un progrès important du point de vue de la résistivité.

**Exemple II**

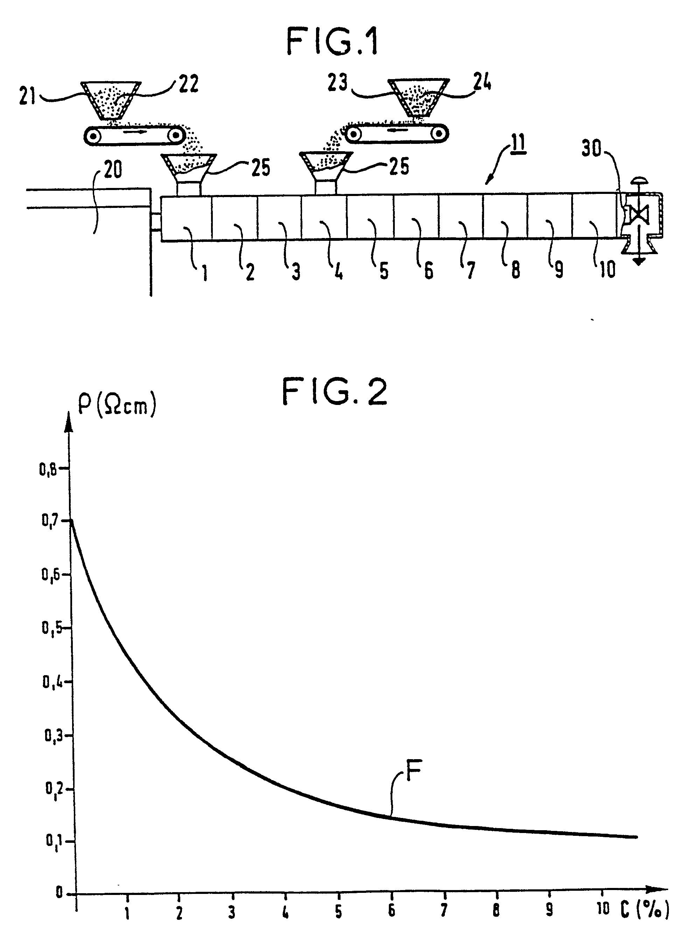

On part des mêmes composants de base que dans l'exemple I, et on opère à l'aide d'un malaxeur 11 visible sur la figure 1, pour réaliser un matériau thermoplastique comportant le noir dans une proportion de 38 %.

Il s'agit d'un malaxeur à double vis du type de ceux vendus sous la marque WERNER und PFLEIDERER, la longueur de la double vis étant supérieure à vingt fois son diamètre. A titre d'exemple les malaxeurs vendus sous la référence ZSK 30 et ZSK 57 ont respectivement un diamètre de 30 mm et 57 mm.

La double vis est entourée de fourreaux, référencés de 1 à 10 dans la figure, et qui sont régulés comme on va le voir plus loin à des températures comprises entre 165°C et 300°C. La double vis est actionnée par un moteur schématiquement représenté par la boîte 20 et sa vitesse de rotation est comprise entre 150 tours par minute et 250 tours par minute.

Un copolymère de propylène et d'éthylène 22 dosé avec une précision de ± 1 % dans un doseur gravimétrique 21 est introduit par un dispositif 25 dans la première zone de la double vis entourée par le fourreau 1; à ce niveau la résine est compactée et préchauffée, mais il faut éviter toute gélification. Au niveau des fourreaux 2 et 3, la double vis réalise un malaxage et une plastification de la résine, le fourreau 2 étant régulé à 220°C et le fourreau 3 à 295°C. Au niveau du fourreau 4, également régulé à 295°C, on introduit du noir de carbone 24. Le noir a été préalablement dosé à 38 % en poids avec grande précision dans un doseur gravimétrique 23. Il se produit alors l'incorporation du noir de carbone 24 et sa dispersion dans la résine.

Le malaxage et la dispersion se poursuivent dans la double vis au niveau des fourreaux 5 à 10, le fourreau 5 étant régulé à 295°C, les fourreaux 6 à 10 à 200°C. Un dégazage du mélange est prévu au niveau du fourreau 9, par exemple sous 55 mBars.

Le mélange obtenu passe à travers une tête d'extrusion 30 régulée à une température de l'ordre de 250°C. L'extrusion s'effectue à travers une filière de dix trous présentant un diamètre de quelques millimètres chacun, le matériau à la sortie de la filière se trouvant à une température de l'ordre de 270°C. Les joncs ainsi formés passent dans un bac d'eau et sont introduits dans un granulateur.

On peut obtenir par exemple un débit de matériau de l'ordre de 55 Kg/heure lorsque la double vis tourne à 250 tours/minute.

La résistivité du matériau obtenu est de 0,70 ohm-cm. Remarquons ici que la charge en noir de carbone est très inférieure à celle de l'exemple I.

Selon l'invention on a ajouté au mélange précédemment décrit contenant déjà 38 % de noir VULCAN XC 72, des charges carbonées fibreuses dans un rapport de poids de 3 % à 9 %. On a observé de manière surprenante une multiplication de la conductivité électrique par un facteur allant de 3 à 6. Si on se réfère à la figure 2 on peut voir qu'avec une addition de fibres C de 3 %, 6 % et 9 %, on passe successivement à des résistivités ρ de 0,25, 0,14 et 0,12 ohm-centimètre.

Il convient de remarquer que l'utilisation de fibres de carbone seule conduirait à des résistivités considérables, même avec des taux de charge beaucoup plus élevés que ceux utilisés jusqu'ici. Par exemple, un mélange de 60 % de Nylon 6/6 et 40 % de fibres de carbone fabriqué par L.N.P. présente une résistivité de 5 à 20 ohms-centimètre.

Avec un mélange conducteur chargé à 6 % de fibres de carbone courtes selon l'invention, la Demanderesse a réalisé dans les mêmes conditions que celles décrites plus haut des éléments bipolaires de piles à combustible qui possèdent une conductibilité très supérieure avec en outre toutes les qualités suivantes:

4

- la dureté: 60 à 70 Shore
- la souplesse: un élément de 1,5 mm d'épaisseur peut être fléchi sans dommage en arc de cercle de 150 mm de diamètre
- la résistance à la traction: ledit élément peut subir une contrainte maximale de 2,5 da N/mm$^2$ à 3,5 da N/mm$^2$ pour un allongement de 4,0 % à 7,5 %
- l'inertie thermique et l'inertie chimique

Bien entendu, l'invention n'est pas limitée au mode de réalisation qui a été décrit, notamment en ce qui concerne le type de malaxeur double vis, les températures de régulation des différents fourreaux, la nature du copolymère de propylène et d'éthylène et celle des charges carbonées.

On peut en particulier remplacer le noir de carbone VULCAN par d'autres types de noirs de carbone. Ainsi, le KET-JEN BLACK de marque AKZO a permis d'obtenir avec un taux de charge de 25 % la même résistivité que le VULCAN au taux de 38 %.

## Revendications

1. Matériau thermoplastique conducteur de l'électricité, caractérisé par le fait qu'il comprend un mélange de copolymère de propylène et d'éthylène, de noir de carbone dans une proportion de 30 % à 50 % en poids, et d'une charge carbonée fibreuse dans une proportion inférieure à 10 % en poids de préférence de 3 % à 9 % en poids.

2. Matériau thermoplastique selon la revendication 1, caractérisé par le fait que ledit noir de carbone se trouve dans une proportion comprise entre 35 % et 45 %.

## Patentansprüche

1. Elektrisch leitendes thermoplastisches Material, dadurch gekennzeichnet, daß es eine Mischung bestehend aus einem Copolymer von Propylen und Äthylen, Ruß in 30 bis 50 Gew. % und einer Charge an Kohlenstoffasern in einer Menge von weniger als 10 Gew. %, vorzugsweise von 3 bis 9 Gew. % aufweist.

2. Thermoplastisches Material nach Anspruch 1 dadurch gekennzeichnet, daß der Rußanteil zwischen 35 % und 45 % liegt.

## Claims

1. An electrically conductive thermoplastic material, characterized in that it comprises a mixture of a copolymer of propylene and ethylene, of carbon black in a proportion of 30 % and 50 % by weight, and of a carbon fibre fill in a proportion of not more than 10 % by weight, preferably 3 % to 9 % by weight.

2. A thermoplastic material according to claim 1, characterized in that the content of said carbon black amounts to a proportion by weight lying in the range 35 % to 45 %.

EP 0 192 005 B1

# FIG.1

# FIG.2